(19) Europäisches Patentamt / European Patent Office / Office européen des brevets

(11) **EP 3 225 056 B1**

(12) **EUROPEAN PATENT SPECIFICATION**

(45) Date of publication and mention of the grant of the patent:
**27.02.2019 Bulletin 2019/09**

(51) Int Cl.:
*H04W 48/18* (2009.01)  *H04W 4/02* (2018.01)
*H04W 36/00* (2009.01)  *H04W 48/20* (2009.01)

(21) Application number: **15805718.2**

(22) Date of filing: **25.11.2015**

(86) International application number:
**PCT/US2015/062603**

(87) International publication number:
**WO 2016/086096 (02.06.2016 Gazette 2016/22)**

(54) **MODIFYING CELL SELECTION FOR USER EQUIPMENTS (UE) EXPERIENCING A MISMATCH BETWEEN THE DOWNLINK (DL) RECEPTION RANGE AND THE UPLINK (UL) TRANSMISSION RANGE**

MODIFIKATION DER ZELLAUSWAHL FÜR BENUTZERGERÄTE (UE) MIT EINER FEHLANPASSUNG ZWISCHEN DEM DOWNLINK (DL)-EMPFANGSBEREICH UND DEM UPLINK (UL)-SENDEBEREICH

MODIFICATION DE LA SÉLECTION DE CELLULES POUR ÉQUIPEMENTS UTILISATEURS (UE) SOUMIS À UN DÉSACCORD ENTRE LA PLAGE DE RÉCEPTION DE LIAISON DESCENDANTE (DL) ET LA PLAGE DE TRANSMISSION DE LIAISON MONTANTE (UL)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2014 US 201462084957 P**
**24.11.2015 US 201514950511**

(43) Date of publication of application:
**04.10.2017 Bulletin 2017/40**

(73) Proprietor: **Qualcomm Incorporated**
**San Diego, CA 92121-1714 (US)**

(72) Inventors:
• **BALASUBRAMANIAN, Srinivasan**
**San Diego, California 92121-1714 (US)**
• **KINTHADA VENKATA, Madhusudan**
**San Diego, California 92121-1714 (US)**
• **PRATHA, Raj**
**San Diego, California 92121-1714 (US)**
• **KANABAR, Riddhi**
**San Diego, California 92121-1714 (US)**

(74) Representative: **Hohgardt, Martin**
**Bardehle Pagenberg Partnerschaft mbB**
**Patentanwälte, Rechtsanwälte**
**Prinzregentenplatz 7**
**81675 München (DE)**

(56) References cited:
**WO-A1-2012/066384     WO-A2-2014/057441**
**US-A1- 2014 098 693**

• **GPP TS 25.304 V12.3.0 (2014-09): "GPP TS 25.304 V12.3.0 (2014-09); 3rd Generation Partnership Project; Technical Specification Group Radio Access Network; User Equipment (UE) procedures in idle mode and procedures for cell reselection in connected mode (Release 12)", 3GPP STANDARD; 3GPP TS 25.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.3.0, 25 September 2014 (2014-09-25), pages 1-58, XP050925926, [retrieved on 2014-09-25]**

**Description**

BACKGROUND

The following relates generally to wireless communication, and more specifically to cell selection for devices with asymmetry between uplink and downlink communications.

Wireless communications systems are widely deployed to provide various types of communication content such as voice, video, packet data, messaging, broadcast, and so on. These systems may be multiple-access systems capable of supporting communication with multiple users by sharing the available system resources (*e.g.,* time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems, (*e.g.,* a Long Term Evolution (LTE) system).

By way of example, a wireless multiple-access communications system may include a number of base stations, each simultaneously supporting communication for multiple communication devices, which may be otherwise known as user equipment (UEs). A base station may communicate with the communication devices on downlink channels (*e.g.,* for transmissions from a base station to a UE) and uplink channels (*e.g.,* for transmissions from a UE to a base station). US 2014/0098693 A1, WO 2014/057441 A2 and WO 2012/066384 A1 describe concepts for the selection of an appropriate cell.

In some cases, a UE with high antenna gain may experience a mismatch between the range at which it may receive data and the range at which it may reliably transmit data. For instance, a high gain antenna may have high receiver gain, but its transmission power may be limited. In some cases a UE with such an antenna may be located near an international border and within range of both a public land mobile network (PLMN) cell and a visitor or visited PLMN (VPLMN) cell (*e.g.,* a VPLMN of a neighboring country the UE is approaching). Based on the high gain receiver and the UEs cell selection rules, the UE may remain on the PLMN despite there being a more favorable VPLMN available for connection. This may result in transmit failures, radio link failures (RLFs) and dropped calls. Therefore, there is a need for an improvement.

SUMMARY

The invention is set out in the appended set of claims.

The embodiments and/or examples of the following description which are not covered by the scope of the appended claims are considered as not being part of the present invention.

Systems, methods, and apparatuses for cell selection for devices with asymmetry between uplink and downlink communications are described. In various examples a UE may identify an asymmetric condition between uplink (UL) and downlink (DL) communications, and modify cell selection criteria based on the identified asymmetry. In some examples, identifying the UL/DL asymmetry may include determining that a DL reception range is greater than a UL transmission range, which may include identifying an availability of a high-gain antenna. In some examples identifying the UL/DL asymmetry may be based on a number of transmit failures, such as determining that a number of transmit failures exceeds a threshold.

The UE determines that the UE is located at a border region, such as a public land mobile network (PLMN) border area by identifying a mobile country code (MCC) of a network. In examples where a UE with an asymmetric UL/DL condition is located at a PLMN border area, the UE may modify cell selection parameters in order to leave a current PLMN for a more favorable visitor or visited PLMN (VPLMN). The UE may identify the border area by monitoring global positioning system (GPS) coordinates, searching for a background PLMN after experiencing a number of transmit failures, or by detecting a high block error rate (BLER).

A method of communication at a wireless device is described. The method may include: identifying an asymmetric uplink/downlink (UL/DL) condition of a user equipment (UE); and modifying a cell selection parameter associated with an access network based at least in part on identifying the asymmetric UL/DL condition.

An apparatus for wireless communication is described. The apparatus may include a processor, memory in electronic communication with the processor; and instructions stored in the memory. The instructions may be executable by the processor to cause the apparatus to: identify an asymmetric uplink/downlink (UL/DL) condition of a user equipment (UE); and modify a cell selection parameter associated with an access network based at least in part on identifying the asymmetric UL/DL condition.

Another apparatus for wireless communication is described. The apparatus may include means for identifying an asymmetric uplink/downlink (UL/DL) condition of a user equipment (UE); and means for modifying cell selection parameter associated with an access network based at least in part on identifying the asymmetric UL/DL condition.

A non-transitory computer-readable medium storing code for wireless communications is described. The code may include instructions executable to: identify an asymmetric uplink/downlink (UL/DL) condition of a user equipment (UE); and modify cell selection parameter associated with an access network based at least in part on identifying the asymmetric UL/DL condition.

In some examples of the method, apparatuses, or non-transitory computer-readable medium, identifying the asymmetric UL/DL condition may include steps, features, means, or instructions for determining that a downlink (DL) reception range of the UE is greater than an uplink (UL) transmission range of the UE. In some examples of the method, apparatuses, or non-transitory computer-readable medium, identifying the asymmetric UL/DL condition may include steps, features, means, or instructions for identifying an availability of a high gain receiver of the UE. In some examples of the method, apparatuses, or non-transitory computer-readable medium, identifying the asymmetric UL/DL condition may include steps, features, means, or instructions for determining that a number of transmit failures exceeds a threshold.

Some examples of the method, apparatuses, or non-transitory computer-readable medium may include steps, features, means, or instructions for declaring out of sync (OOS) with a serving cell of the access network. Some examples of the method, apparatuses, or non-transitory computer-readable medium may include steps, features, means, or instructions for searching for a visitor public land mobile network (VPLMN) based at least in part on determining that a number of transmit failures exceeds the threshold.

Some examples of the method, apparatuses, or non-transitory computer-readable medium may include steps, features, means, or instructions for performing a cell selection procedure for a second access network based at least in part on the modified cell selection parameter. In some examples of the method, apparatuses, or non-transitory computer-readable medium, modifying the cell selection parameter may include steps, features, means, or instructions for bypassing a public land mobile network (PLMN) cell selection.

Some examples of the method, apparatuses, or non-transitory computer-readable medium may include steps, features, means, or instructions for receiving broadcast cell selection information from the access network, wherein the cell selection parameter is based at least in part on the broadcast cell selection information.

In some examples of the method, apparatuses, or non-transitory computer-readable medium, the cell selection parameter is associated with a first radio access technology (RAT) of the access network, and wherein the method further may include steps, features, means, or instructions for modifying a second cell selection parameter associated with a second RAT of a second access network, wherein the second RAT is different from the first RAT.

In some examples of the method, apparatuses, or non-transitory computer-readable medium, the access network is a public land mobile network (PLMN). Some examples of the method, apparatuses, or non-transitory computer-readable medium may include steps, features, means, or instructions for identifying the access network based at least in part on a mobile country code (MCC).

Some examples of the method, apparatuses, or non-transitory computer-readable medium may include steps, features, means, or instructions for determining that the UE is located at a border area of the access network. In some examples of the method, apparatuses, or non-transitory computer-readable medium, determining that the UE is located at the border area may include steps, features, means, or instructions for identifying a set of global positioning system (GPS) coordinates for the UE, wherein the set of GPS coordinates corresponds to the border area.

In some examples of the method, apparatuses, or non-transitory computer-readable medium, determining that the UE is located at the border area may include steps, features, means, or instructions for identifying a mobile country code (MCC) of a second access network, wherein the MCC of the second access network is different from an MCC of the access network.

In some examples of the method, apparatuses, or non-transitory computer-readable medium, determining that the UE is located at the border area may include steps, features, means, or instructions for determining that an identified visitor public land mobile network (VPLMN) corresponds to a background public land mobile network (BPLMN) database.

In some examples of the method, apparatuses, or non-transitory computer-readable medium described above, determining that the UE is located at the border region includes determining that a BLER exceeds a threshold. Additionally or alternatively, some examples may include processes, features, means, or instructions for searching for a VPLMN based at least in part on determining that the BLER exceeds the threshold. In some examples of the method, apparatuses, or non-transitory computer-readable medium, the UE may be a receiver of an automobile.

The foregoing has outlined rather broadly the features and technical advantages of examples according to the disclosure in order that the detailed description that follows may be better understood. Additional features and advantages will be described hereinafter.

Characteristics of the concepts disclosed herein, both their organization and method of operation, together with associated advantages will be better understood from the following description when considered in connection with the accompanying figures. Each of the figures is provided for the purpose of illustration and description only, and not as a definition of the limits of the claims.

BRIEF DESCRIPTION OF THE DRAWINGS

A further understanding of the nature and advantages of the present disclosure may be realized by reference to the following drawings. In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

FIG. 1 illustrates an example of a wireless communications system in accordance with aspects of the present disclosure;

FIG. 2 illustrates an example of a wireless communications system for cell selection for devices having an asymmetric condition between uplink and downlink communications in accordance with aspects of the present disclosure;

FIG. 3 illustrates an example of a process flow diagram for cell selection for devices having an asymmetric condition between uplink and downlink communications in accordance with aspects of the present disclosure;

FIG. 4 shows a block diagram of a wireless device configured for cell selection for devices having an asymmetric condition between uplink and downlink communications in accordance with aspects of the present disclosure;

FIG. 5 shows a block diagram of a wireless device for cell selection for devices having an asymmetric condition between uplink and downlink communications in accordance with aspects of the present disclosure;

FIG. 6 shows a block diagram of a cell selection module which may be a component of a wireless device for cell selection for devices having an asymmetric condition between uplink and downlink communications in accordance with aspects of the present disclosure;

FIG. 7 shows a diagram of a system including a UE configured for cell selection for devices having an asymmetric condition between uplink and downlink communications in accordance with aspects of the present disclosure;

FIG. 8 shows a flowchart illustrating a method for cell selection for devices having an asymmetric condition between uplink and downlink communications in accordance with aspects of the present disclosure;

FIG. 9 shows a flowchart illustrating a method for cell selection for devices having an asymmetric condition between uplink and downlink communications in accordance with aspects of the present disclosure;

FIG. 10 shows a flowchart illustrating a method for cell selection for devices having an asymmetric condition between uplink and downlink communications in accordance with aspects of the present disclosure;

FIG. 11 shows a flowchart illustrating a method for cell selection for devices having an asymmetric condition between uplink and downlink communications in accordance with aspects of the present disclosure;

FIG. 12 shows a flowchart illustrating a method for cell selection for devices having an asymmetric condition between uplink and downlink communications in accordance with aspects of the present disclosure; and

FIG. 13 shows a flowchart illustrating a method for cell selection for devices having an asymmetric condition between uplink and downlink communications in accordance with aspects of the present disclosure.

DETAILED DESCRIPTION

Various user equipment (UE), whether due to physical or environmental constraints, may have or experience asymmetric uplink/downlink (UL/DL) capabilities. This asymmetry may, in some cases, be more pronounced near the border (*e.g.,* edge) of a public land mobile network (PLMN). For instance, high gain user equipment (HG-UE), such as automotive modems with roof top antennas, may have antenna gain that is potentially 10 to 15 dB higher than smartphone antennas. Because of the high gain capability, the HG-UE may be able to receive DL signals from base stations with which it would be unable to communicate based on, for example, limited UL transmit power. This situation in which the relation of a DL signal reception capability to an UL transmit capability departs from system norms can affect mobility decisions and is herein referred as an asymmetric UL/DL condition. When corresponding capabilities are involved, such as the use of a high gain antenna, etc., these capabilities may be referred to as asymmetric UL/DL capabilities. However, it will be recognized that a normal user equipment may experience asymmetric UL/DL conditions in certain instances and that the present disclosure is not limited to a particular hardware or software capability.

One such asymmetric UL/DL condition can arise when a high gain UE (HG-UE) is within the range of different PLMNs, *e.g.,* a home PLMN (HPLMN) and a visitor or visited PLMN (VPLMN). This may occur, for example, when the HG-UE is traversing an international border. In such a scenario, cell selection criteria used by a UE to select a serving cell, may be satisfied by a distant cell due to the high receive antenna gain; however, the UE may be unable to communicate with the distant cell due to UL transmit power limitations. In some examples, parameters associated with cell selection criteria used by a UE to determine whether to connect to a cell may be signaled by the network through system information messages. However, different sets of parameters for different types of UEs may not be signaled. Therefore, an HG-UE may remain on distant HPLMNs and experience uplink failures, despite VPLMNs with more suitable uplink characteristics being available to the UE.

In order to leave the current PLMN and to select a VPLMN, a HG-UE may modify various parameters associated with the cell selection criteria of the HG-UE. For example, an HG-UE may identify an asymmetric UL/DL condition and make a modification to cell selection parameters based on identifying the asymmetric UL/DL condition. In some examples, identifying the UL/DL asymmetry may include determining that a DL reception range is greater than a UL transmission range, or may include identifying an availability of a high-gain antenna. In some examples identifying the UL/DL asymmetry may be based on a number of transmit failures, such as determining that a number of transmit failures exceeds a threshold.

In some examples, a modification to cell selection criteria may be based on determining that the UE is located at a border area of an access network, or in place of adjacency for several radio access networks. For example, the modification may be based on global positioning system (GPS) coordinates associated with known network border regions and the location of the UE. For instance, a UE may use its GPS coordinates to determine when it is near an international border, which may approximately coincide with a PLMN border, and may respond by offsetting parameters of its cell selection criteria. The modification may also occur when the UE detects a different mobile country code (MCC) from a cell of a neighboring VPLMN.

In some examples, a modification to the cell selection criteria may include modifying a parameter used to rank cells for selection by a UE. For example, a cell selection parameter may be modified in a manner that bypasses a selection, or otherwise lowers a selection rank of a cell that may be adversely affected by an asymmetric UL/DL condition. When such a potential asymmetric UL/DL condition is identified, the UE may perform a cell selection procedure for the VPLMN based on the modified cell selection criteria. In some cases, the UE may look for a VPLMN from an existing background PLMN (BPLMN) database. For example, after detecting a number of transmit failures, the UE may declare it is out of sync (OOS) with the current serving cell so that it may camp on the VPLMN. In another example, a UE may experience a high uplink block error rate (BLER) resulting in radio link failures (RLFs) and dropped calls. In response to experiencing the high BLER, a UE may attempt PLMN selection to find better VPLMN cells.

In still other examples, a UE may be in a congested location and may be able to communicate with a number of PLMNs. Such a UE may be near several network borders and thus several densely configured PLMNs-*e.g.*, within Europe-or the UE may be near several PLMNs within a single country. In such a scenario, the UE may be able to more readily communicate with a PLMN other than the one to which it is presently connected. Thus, a UE can identify an asymmetric UL/DL condition, and the UE may modify cell selection parameters associated with an access network based on the identified asymmetric UL/DL condition to improve its performance.

According to aspects of the present disclosure, modification of cell selection parameters may occur for any radio access technology (RAT). In some cases, different generations of RATs may exist in the same network (*e.g.,* various stages of 1G, 2G, 3G, or 4G implementations). So, one PLMN cell may operate with a first RAT and a different PLMN cell (*e.g.,* a VPLMN cell) may operate with a second RAT. The cell selection parameters may vary for different RATs and, the parameters may be adapted accordingly to ensure an efficient transition to the neighboring PLMN. In some cases, this may include adapting or bypassing network broadcast selection parameters. Thus, a UE may decrease outages and improve service by discovering and connecting to a VPLMN with a reduced delay.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

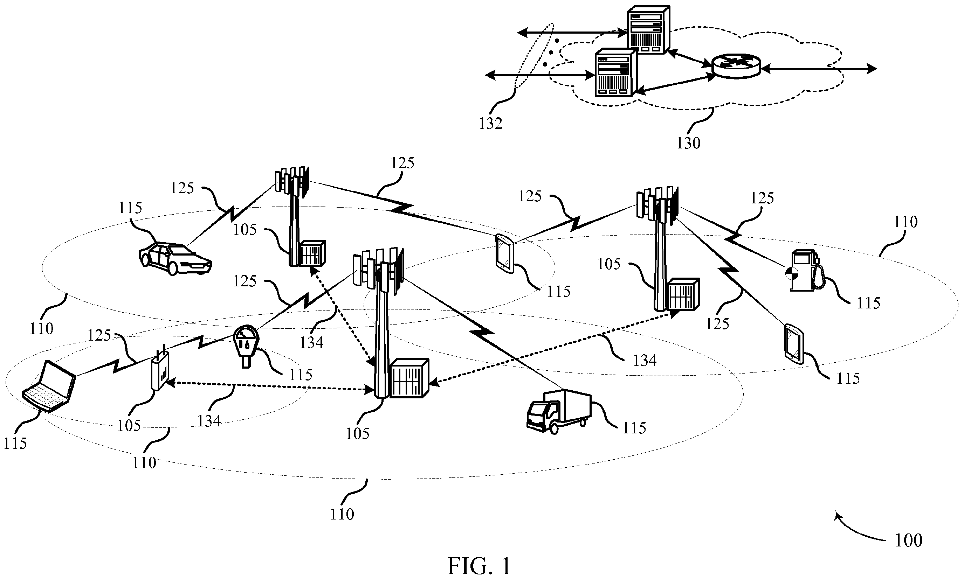

**FIG. 1** illustrates an example of a wireless communications system 100 in accordance with aspects of the present disclosure. The wireless communications system 100 includes base stations 105, at least one UE 115, and a core network 130. The core network 130 may provide user authentication, access authorization, tracking, internet protocol (IP) connectivity, and other access, routing, or mobility functions. The base stations 105 interface with the core network 130 through backhaul links 132 (*e.g.,* S1, *etc*.). The base stations 105 may perform radio configuration and scheduling for communication with the UEs 115, or may operate under the control of a base station controller (not shown). In various examples, the base stations 105 may communicate, either directly or indirectly (*e.g.,* through core network 130), with one another over backhaul links 134 (*e.g.,* XI, *etc.*), which may be wired or wireless communication links.

The base stations 105 may wirelessly communicate with the UEs 115 via one or more base station antennas. Each of the base stations 105 may provide communication coverage for a respective geographic coverage area 110. In some examples, base stations 105 may be referred to as a base transceiver station, a radio base station, an access point, a radio transceiver, a NodeB, eNodeB (eNB), Home NodeB, a Home eNodeB, or some other suitable terminology. The geographic coverage area 110 for a base station 105 may be divided into sectors making up only a portion of the coverage area (not shown). The wireless communications system 100 may include base stations 105 of different types (*e.g.,* macro or small cell base stations). Each of the base stations 105 may be configured to communicate using one or more communication technologies, and there may be overlapping geographic coverage areas 110 for different technologies.

In some examples, the wireless communications system 100 includes a Long Term Evolution (LTE)/LTE-Advanced (LTE-A) network. In LTE/LTE-A networks, the term evolved node B (eNB) may be used to describe the base stations 105, while the term UE may be used to describe various wireless communication devices that operate on the LTE/LTE-A network. The wireless communications system 100 may include, for instance, a heterogeneous LTE/LTE-A network in which different types of base stations 105 provide coverage for various geographical regions. For example, each base station 105 may provide communication coverage for a macro cell, a small cell, or other types of cell. The term "cell" is a 3GPP term that can be used to describe a base station, a carrier or component carrier associated with a base station, or a coverage area (*e.g.,* sector, *etc.*) of a carrier or base station, depending on context. The wireless communications system 100 may also include base stations communicating according to, for example, UMTS, CDMA2000, GSM, or the like, and as recited below.

A macro cell generally covers a relatively large geographic area (*e.g.,* several kilometers in radius) and may allow unrestricted access by UEs with service subscriptions with the network provider. A small cell is a lower-powered base station, as compared with a macro cell, that may operate in the same or different (*e.g.,* licensed, unlicensed, *etc.*) frequency bands as macro cells. Small cells may include pico cells, femto cells, and micro cells according to various examples. A pico cell may cover a relatively smaller geographic area and may allow unrestricted access by UEs with service subscriptions with a network provider. A femto cell also may cover a relatively small geographic area (*e.g.,* a home) and may provide restricted access by UEs having an association with the femto cell (*e.g.,* UEs in a closed subscriber group (CSG), UEs for users in the home, and the like). A base station for a macro cell may be referred to as a macro base station. A base station for a small cell may be referred to as a small cell base station, a pico base station, a femto base station or a home base station. A base station may support one or multiple (*e.g.,* two, three, four, and the like) cells (*e.g.,* component carriers).

The wireless communications system 100 may support synchronous or asynchronous operation. For synchronous operation, the base stations 105 may have similar frame timing, and transmissions from different base stations 105 may be approximately aligned in time. For asynchronous operation, the base stations 105 may have different frame timing, and transmissions from different base stations 105 may not be aligned in time. The techniques described herein may be used for either synchronous or asynchronous operations.

Communication networks that may accommodate various disclosed examples may be packet-based networks that operate according to a layered protocol stack and data in the user plane may be based on the IP. A radio link control (RLC) layer may perform packet segmentation and reassembly to communicate over logical channels. A medium access control (MAC) layer may perform priority handling and multiplexing of logical channels into transport channels. The MAC layer may also use hybrid automatic repeat request (HARQ) to provide retransmission at the MAC layer to improve link efficiency. In the control plane, the radio resource control (RRC) protocol layer may provide establishment, configuration, and maintenance of an RRC connection between a UE 115 and the base stations 105. The RRC protocol layer may also be used for core network 130 support of radio bearers for the user plane data. At the physical (PHY) layer, the transport channels may be mapped to physical channels.

The UEs 115 may be dispersed throughout the wireless communications system 100, and each UE 115 may be stationary or mobile. A UE 115 may also include or be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or other suitable terminology. A UE 115 may be a cellular phone, a personal digital assistant (PDA), a wireless modem, a wireless communication device, a handheld device, a tablet computer, a laptop computer, a cordless phone, a wireless local loop (WLL) station, or the like. A UE 115 may, in some examples, be an HG-UE. A UE may be able to communicate with various types of base stations and network equipment including macro base stations, small cell base stations, relay base stations, and the like.

The communication links 125 shown in wireless communications system 100 may include uplink (UL) transmissions from a UE 115 to a base station 105, or downlink (DL) transmissions, from a base station 105 to a UE 115. The downlink transmissions may be referred to as forward link transmissions and the uplink transmissions may be referred to as reverse link transmissions. Each communication link 125 may include one or more carriers, where each carrier may be a signal made up of multiple sub-carriers (*e.g.,* waveform signals of different frequencies) modulated according to the various radio technologies described above. Each modulated signal may be sent on a different sub-carrier and may carry control information (*e.g.,* reference signals, control channels, *etc.*), overhead information, user data, *etc.* The communication links 125 may transmit bidirectional communications using frequency division duplex (FDD) (*e.g.,* using paired spectrum resources) or time division duplex (TDD) operation (*e.g.,* using unpaired spectrum resources). Frame structures may be defined for FDD (*e.g.,* frame structure type 1) and TDD (*e.g.,* frame structure type 2).

LTE/LTE-A utilizes multi-carrier modulation (MCM) techniques including orthogonal frequency-division multiple access (OFDMA) on the downlink and single-carrier frequency division multiple-access (SC-FDMA) on the uplink. Each MCM carrier is a waveform signal made up of multiple sub-carriers (*e.g.,* orthogonal sub-carriers, *etc.*), which may be referred to as tones, bins, or the like. Each sub-carrier may be modulated with information (*e.g.,* reference signals, control information, overhead information, user data, *etc.*). The spacing between adjacent sub-carriers may be fixed, and the total number of sub-carriers (K) may be dependent on the carrier bandwidth. For example, K may be equal to 72, 180, 300, 600, 900, or 1200 with a sub-carrier spacing of 15 kilohertz (KHz) for a corresponding carrier bandwidth (with guardband) of 1.4, 3, 5, 10, 15, or 20 megahertz (MHz), respectively. The carrier bandwidth may be partitioned into sub-bands. For example, a sub-band may cover 1.08 MHz, and a carrier may have 1, 2, 4, 8 or 16 sub-bands.

In some examples of the wireless communications system 100, base stations 105 or UEs 115 may include multiple antennas for employing antenna diversity schemes to improve communication quality and reliability between base stations 105 and UEs 115. Additionally or alternatively, base stations 105 or UEs 115 may employ multiple input multiple output (MIMO) techniques that may be configured to operate on multi-path environments to transmit multiple spatial layers carrying the same or different coded data.

Wireless communications system 100 may support operation on multiple cells or carriers, a feature which may be referred to as carrier aggregation (CA) or multi-carrier operation. The term component carrier (CC) may refer to each of the multiple carriers utilized by a UE in CA operation, and may be distinct from other portions (*e.g.,* other carriers, *etc.*) of system bandwidth. In CA operation, a UE 115 may be configured to utilize multiple downlink and/or uplink CCs concurrently to provide greater operational bandwidth, which may support higher data rates. CCs used in CA operation may be any suitable bandwidth (*e.g.,* 1.4, 3, 5, 10, 15, or 20 megahertz (MHz), *etc.*), and in some examples each individual CC may provide the same capabilities as a single carrier (*e.g.,* a single carrier based on Release 8 or Release 9 of the LTE standard). Thus, individual CCs may be backwards compatible with legacy UEs 115 (*e.g.,* UEs 115 implementing LTE Release 8 or Release 9), while also being utilized by other UEs 115 (*e.g.,* UEs 115 implementing LTE versions after Release 8 or Release 9) configured for CA or in single carrier mode. Alternatively, a CC may be configured to be used in combination with other CCs and may not carry some channels used to support single carrier mode (*e.g.,* format or control channels, *etc.*). In various examples, CA may be used with both FDD and TDD component carriers.

Wireless communications system 100 may have cells that operate in an ultra-high frequency (UHF) frequency region using frequency bands from 700 MHz to 2600 MHz (2.6 GHz), although in some cases wireless local area network (WLAN) networks may use frequencies as high as 4 GHz. This region may also be known as the decimeter band, since the wavelengths range from approximately one decimeter to one meter in length. UHF waves may propagate mainly by line of sight, and may be blocked by buildings and environmental features. However, the waves may penetrate walls sufficiently to provide service to UEs 115 located indoors. Transmission of UHF waves is characterized by smaller antennas and shorter range (*e.g.,* less than 100 km) compared to transmission using the smaller frequencies (and longer waves) of the high frequency (HF) or very high frequency (VHF) portion of the spectrum.

A UE 115 attempting to access a wireless network may perform an initial cell search by detecting a primary synchronization signal (PSS) from a base station 105. The PSS may enable synchronization of slot timing and may indicate a physical layer identity value. The UE 115 may then receive a secondary synchronization signal (SSS). The SSS may enable radio frame synchronization, and may provide a cell identity value, which may be combined with the physical layer identity value to identify the cell. The SSS may also enable detection of a duplexing mode and a cyclic prefix length. Some systems, such as TDD systems, may transmit an SSS but not a PSS. After receiving the PSS and SSS, the UE 115 may receive a master information block (MIB), which may be transmitted in the physical broadcast channel (PBCH). The MIB may contain system bandwidth information, a system frame number (SFN), and a physical HARQ indicator channel (PHICH) configuration. After decoding the MIB, the UE 115 may receive one or more system information block (SIBs). For example, SIB1 may contain cell access parameters and scheduling information for other SIBs. Decoding SIB1 may enable the UE 115 to receive SIB2. SIB2 may contain RRC configuration information related to random access channel (RACH) procedures, paging, physical uplink control channel (PUCCH), physical uplink shared channel (PUSCH), power control, SRS, and cell barring.

A UE 115 may also perform a cell selection procedure to establishing a connection with a base station 105. For example, a UE 115 may camp on a cell of a base station 105 after verifying that specific criteria have been fulfilled. In some cases, the UE 115 may first scan a set of supported frequency bands in search of a suitable cell. The UE 115 may then select based on the strength of the signals for each carrier. Selection (S) criteria may also be used to determine whether or not a cell is suitable. For example, an equation such as the one below may be used to determine whether the criteria for cell selection are fulfilled (*e.g.,* a cell may be suitable when the cell selection receive level, $S_{rxlev}$, is greater than 0).

$$S_{rxlev} = Q_{rxlevmeas} - \left(Q_{rxlevmin} + Q_{rxlevminoff}\right) - P_{comp} \qquad (1)$$

where

$$P_{comp} = \max(P_{Emax} - P_{Umax}, 0). \qquad (2)$$

$Q_{rxlevmeas}$ may be the measured receive strength for this cell, *i.e.,* the Reference Signal Received Power (RSRP). This may be the linear average over the power over the measurement bandwidth. $Q_{rxlevmin}$ may be a minimum receive level of the cell, given in decibel milliwatts (dBm). This may be provided by higher layers as part of SIB1. $Q_{rxlevminoff}$ may be an offset to $Q_{rxlevmin}$ that may be taken into account based on a periodic search for a higher priority PLMN while camped normally in a visitor PLMN (VPLMN). This offset may also be derived from SIB 1. $P_{comp}$ may be the maximum of $P_{Emax}$-$P_{Umax}$ or 0, where $P_{Emax}$ is the maximum power allowed in the cell and $P_{Umax}$ is the maximum transmit power of the UE 115. Thus, a UE 115 may receive several cells (*e.g.,* from different PLMNs) and may select a cell after reading SIB1, determining if the cell belongs to its home PLMN, and applying the above criteria (or any other cell selection criteria).

In some cases, a UE 115 may determine that a radio link has failed and initiate a radio link failure (RLF) procedure. For example, an RLF procedure may be triggered upon an RLC indication that a maximum number of retransmissions has been reached, upon receiving a maximum number of out-of-sync (OOS) indications, or upon radio failure during a RACH procedure. In some cases (*e.g.,* after reaching the limit for out-of-sync indications) a UE 115 may initiate a timer and wait to determine whether a threshold number of in-sync indications are received. If the number of in-sync indications exceeds the threshold prior to expiration of the timer, the UE 115 may abort the RLF procedure. Otherwise, the UE 115 may perform a RACH procedure to regain access to network. The RACH procedure may include transmitting an RRC connection re-establishment request including the C-RNTI, the cell identification (ID), security verification information, and a cause for re-establishment. The base station 105 receiving the request may respond with either an RRC connection re-establishment message or an RRC connection re-establishment rejection. The RRC connection re-establishment message may contain parameters for establishing a signaling radio bearer (SRB) for the UE 115 as well as information for generating a security key. Once the UE 115 receives the RRC connection establishment message it may implement the new SRB configuration and transmit an RRC connection re-establishment complete message to the base station 105. In some cases, it may be appropriate to disconnect from a network and perform a cell selection procedure before the RLF conditions are satisfied. For example, RLF conditions may be based on DL conditions, but a UE 115 may not be able to communicate effectively with the serving cell on the UL.

A UE 115 may travel across cell boundaries or may be located within overlapping coverage areas. In some cases, the UE 115 may be within coverage areas 110 that correspond with more than one base station 105. In some examples the UE 115 may possess a high gain antenna (*e.g.,* may be described as an HG-UE), or may otherwise operate with an asymmetric UL/DL condition, and therefore may be capable of receiving transmissions from a base station 105 at relatively long range. The UE 115 may, however, experience failures on the uplink due to limitations of the transmitter. For instance, a UE 115 may be located at a PLMN border area where it may be within range to receive from both a PLMN cell and a VPLMN cell. For example, the UE 115 may be an automotive modem with a high gain (*e.g.,* roof top) antenna, and may be travelling near to or across a national or other administrative border. Or the UE 115 may be in an area that is dense with PLMNs. The UE 115 may remain connected to a current serving PLMN cell (*e.g.,* a cell of its home PLMN (HPLMN)) despite the availability of a more favorable VPLMN cell and despite receiving a number of uplink errors. The UE 115 may therefore modify cell selection parameters (*e.g.,* $Q_{rxlevminoff}$) in order to leave a current PLMN (*e.g.,* HPLMN) for a more favorable VPLMN.

For example, a UE 115 may identify an asymmetric UL/DL condition of the UE 115, and make a modification to cell selection criteria based on the identified asymmetry. In some examples, identifying the UL/DL asymmetry may include determining that a DL reception range is greater than a UL transmission range. In some examples, identifying the asymmetric UL/DL condition may include identifying an availability of a high-gain antenna. In some examples identifying the asymmetric UL/DL condition may be based on a number of transmit failures, such as determining that a number of transmit failures exceeds a threshold. Additionally or alternatively, the UE 115 may identify that the UE 115 is in a border area of an access network by monitoring GPS coordinates, identifying a mobile country code of a network, searching for a background PLMN after experiencing a number of transmit failures, or by detecting a high BLER.

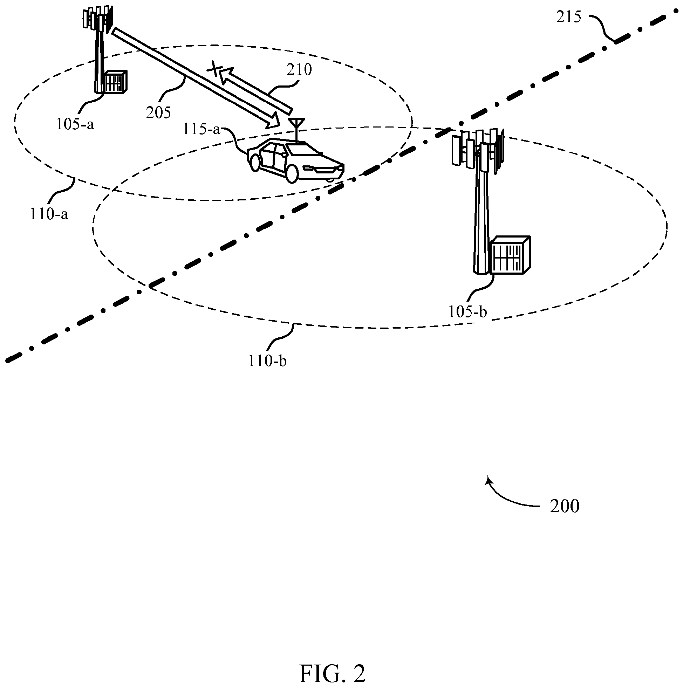

**FIG. 2** illustrates an example of a wireless communications system 200 for cell selection for devices having an asymmetric condition between uplink and downlink communications in accordance with aspects of the present disclosure.

Wireless communications system 200 may include a UE 115-a, which may be an example of a UE 115 described with reference to FIG. 1. Wireless communications system 200 may also include base stations 105-a and 105-b, which may be examples of base stations 105 described with reference to FIG. 1, and base stations 105 may be located within different PLMNs (*e.g.,* due to being located on different sides of an international border 215). Base station 105-a, and UE 115-a may communicate with one another via downlink 205 and uplink 210 when UE 115-a is within coverage area 110-a, as generally described with reference to FIG. 1.

In some cases, UE 115-a may have an asymmetric UL/DL capability. For example, UE 115-a may have a high gain antenna resulting in a DL reception range being greater than an UL transmission range. A UE 115 with asymmetric UL/DL capabilities may fall into the category of an HG-UEs. HG-UEs may have an antenna gain approximately 10 to 15 dB higher than that of smartphone antennas. One example of an HG-UE may be an automotive modem with a roof top antenna. An HG-UE may also be a handheld mobile device, an aerial device, an aircraft, a nautical vessel, a nautical device, or the like. In some cases UE 115-a may be an HG-UE based on inherent hardware properties, but in other cases, the asymmetric UL/DL condition may be temporary. For example, the asymmetric UL/DL may be based on geographic features, on a temporary attachment of the receiver, or on a temporary limitation of the transmitter.

UE 115-a may receive communications from base station 105-a via a downlink 205. Downlink 205 may transmit cell selection parameters, (*e.g.,* S-parameters) which may be used by UE 115-a to determine whether to connect to a cell. In one example, high antenna gain may allow UE 115-a to receive DL communications on downlink 205 from base station 105-a but power limitations may result in transmission failures via the uplink 210. Due to the a mismatched ability to receive and transmit, UE 115-a may remain on a distant PLMNs (*i.e.* a PLMN of base station 105-a within coverage area 110-a) and experience UL failures, despite the presence of a better connection for a cell of a VPLMNs (*e.g.,* for base station 105-b within coverage area 110-b).

In various examples UE 115-a may be configured to identify whether it has, or is otherwise configured to operate with an asymmetric UL/DL capability. In some examples, identifying the UL/DL asymmetry may include UE 115-a determining that a DL reception range is greater than a UL transmission range. In some examples identifying the asymmetric UL/DL capability may include identifying an availability of a high-gain antenna. In some examples identifying the UL/DL asymmetry may be based on a number of transmit failures, such as determining that a number of failures of uplink 210 exceeds a threshold. After identifying the asymmetric UL/DL condition, which may be associated with the asymmetric AL/DL capability, the UE 115-a may then modify cell selection criteria based on identifying the asymmetric UL/DL condition. For instance, UE 115-a may determine one or more failures of uplink 210 with base station 105-a on a distant PLMN, and modify one or more cell selection parameters that facilitate a connection between UE 115-a and a VPLMN (*e.g.,* a PLMN associated with the second base station 105-b).

In some examples, the modification of cell selection criteria may occur when UE 115-a is located near an international border 215, where it may be within the range of multiple different PLMNs, (*e.g.,* a home PLMN (HPLMN) and a VPLMN). UE 115-a may determine that the UE is located near the international border 215, which may correspond to a border area of an access network. UE 115-a may modify one or more cell selection parameters based on proximity to the international border 215 or based on some other indication that it is located at a PLMN border area. This may help expedite the UE's 115-a disconnection from a current PLMN and cell select at a VPLMN in a more timely manner. The UE 115-a may, for example, utilize GPS coordinates or MCC codes to identify when it is located at an international border 215. In other examples, other conditions may be used that relate to PLMN boundary areas. In some cases, base station 105-a of the HPLMN may operate with one RAT and base station 105-b of the VPLMN may operate with a second RAT. As used in this description, PLMN border or access network border may refer to the edge of a coverage area of a network, beyond which a UE 115 may not connect with the network. A border area or border region may thus be a geographic or logical location that is in the proximity of a PLMN or access network border.

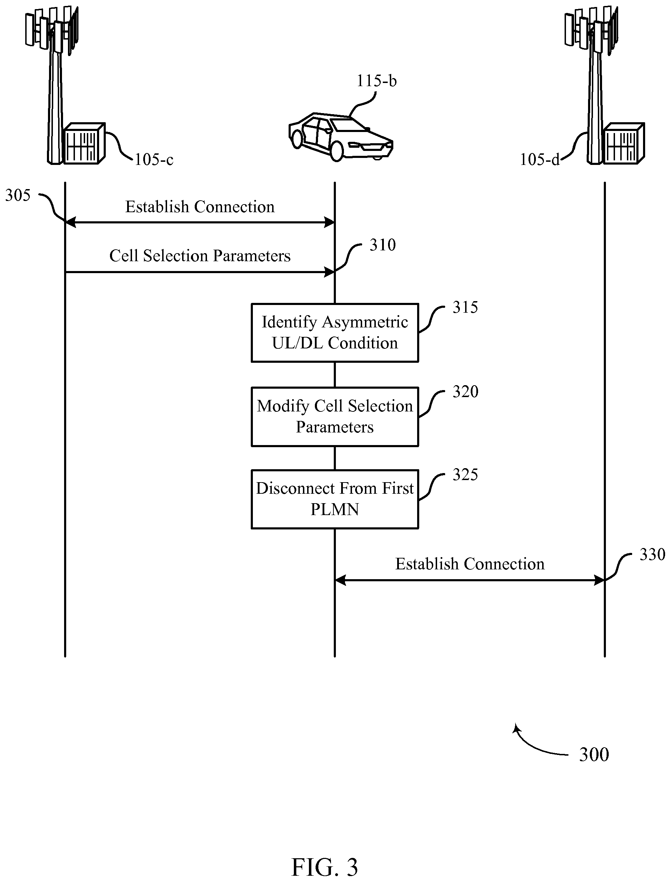

**FIG. 3** illustrates an example of a process flow diagram for cell selection for devices having an asymmetric condition between uplink and downlink communications in accordance with aspects of the present disclosure. Process flow 300 may be performed by UE 115-b, which may be an example of a UE 115 described with reference to FIGs. 1-2. Process flow 300 may also include base stations 105-c and 105-d, which may be examples of a base station 105 described with reference to FIGs. 1-2. In some examples, UE 115-b includes a high gain receiver, such as a receiver of an automobile.

At step 305, UE 115-b may establish a connection with a first base station 105-c, which may be located in an access network such as a home PLMN. At step 310, UE 115-b may receive broadcast cell selection information from the access network. For example, base station 105-c may transmit one or more cell selection parameters to UE 115-b (*e.g.,* in SIB1). The cell selection parameters (*e.g.,* variables associated with aspects of cell selection criteria) for UE 115-b may be based at least in part on the broadcast cell selection information, and the cell selection criteria may be used by UE 115-b to determine whether or not it should establish a connection with base station 105-c.

At step 315, UE 115-b may identify an asymmetric UL/DL condition of the UE. In some examples, identifying the UL/DL asymmetry may include the UE 115-b determining that a DL reception range is greater than a UL transmission range. In some examples, identifying the asymmetric UL/DL condition may include identifying an availability of a high-gain antenna. In some examples identifying the UL/DL asymmetry may be based on a number of transmit failures, such as determining that a number of uplink transmit failures from the UE 115-b to the base station 105-c exceeds a threshold.

In some examples, UE 115-b may determine that the UE 115-b is located at a border region of an access network. For example, UE 115-b may determine that it is located at a border area by identifying a set of GPS coordinates for UE 115-b, where the set of GPS coordinates corresponds to the border area. In other examples, UE 115-b may determine that it is located at a border area by identifying an MCC of a second access network, where the MCC of the second access network is different from an MCC of a serving cell of the access network. In still other examples, UE 115-b may determine that it is located at a border area by determining that an identified VPLMN corresponds to a background PLMN (BPLMN) database, after, *e.g.,* detecting transmit errors on a serving cell of the access network. Additionally or alternatively, UE 115-b may determine that it is located at a border area if the BLER exceeds a threshold, which may, *e.g.,* result in RLF and dropped calls.

At step 320, UE 115-b may modify one or more cell selection parameters associated with the access network based on identifying the asymmetric UL/DL condition, and where applicable, based on determining that the UE is at a border area of an access network. For example, UE 115-b may modify a cell selection parameter if the UE 115-b determines that a DL reception range is greater than a UL transmission range, or if the UE 115-b identifies an availability of a high-gain antenna. In some examples UE 115-b may modify a cell selection parameter if the UE 115-b determines that a number of uplink transmit failures from the UE 115-b to the base station 105-c exceeds a threshold. In various examples, modifying a cell selection parameter may include one or both of adjusting one or more parameters, or using one or more different parameters as applied in a cell selection criteria.

The UE 115-b may, for example, modify its cell selection parameters by applying an offset to one, or several, of its internal cell selection parameters. In some examples the UE 115-b may modify cell selection parameters by performing cell selection according to modified cell selection rules, wherein the modified cell selection rules may use different cell selection parameters . Additionally or alternatively, UE 115-b may modify its cell selection parameters by bypassing a PLMN cell selection parameter, which in some examples may bypass a selection of a PLMN. In some examples, UE 115-b may modify a cell selection parameter with one RAT (*e.g.,* LTE) of one PLMN (*e.g.,* HPLMN), and it may modify another cell selection parameter of a different RAT (*e.g.,* UMTS) associated with a different PLMN (*e.g.,* VPLMN).

At step 325, UE 115-b may disconnect from base station 105-c and leave the home PLMN. In another example, UE 115-b may perform cell selection and disconnect from base station 105-c if it detects an MCC that is different from that of a serving cell of the access network. In yet another example, UE 115-b may declare it is OOS with the a serving cell of the access network and disconnect from base station 105-c if it searches for and finds a VPLMN cell it. In still another example, UE 115-b may attempt PLMN selection and disconnect from base station 105-c if it experiences high BLER and dropped calls. At step 330, UE 115-b may establish a connection with base station 105-d, which may be located in a VPLMN.

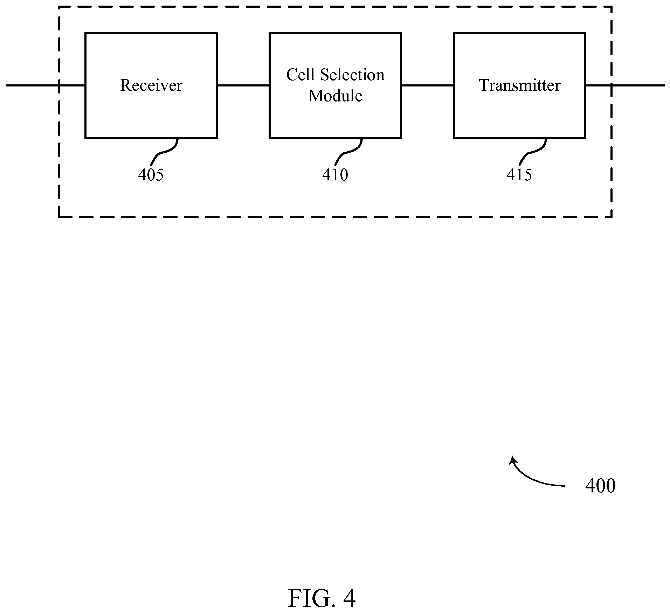

**FIG. 4** shows a block diagram of a wireless device 400 configured for cell selection for devices having an asymmetric condition between uplink and downlink communications in accordance with aspects of the present disclosure. Wireless device 400 may be an example of aspects of a UE 115 described with reference to FIGs. 1-3. Wireless device 400 may include a receiver 405, a cell selection module 410, or a transmitter 415. Wireless device 400 may also include a processor. Each of these components may be in communication with one another.

The receiver 405 may receive information such as packets, user data, or control information associated with various information channels (*e.g.,* control channels, data channels, and information related to cell selection in PLMN border areas, *etc*). Information may be passed on to the cell selection module 410, and to other components of wireless device 400. In some examples, the receiver 405 may receive broadcast cell selection information (*e.g.,* cell selection parameters) from an access network (*e.g.,* PLMN), where cell selection criteria of the wireless device 400 may be based on the broadcast cell selection information. In some examples, the receiver 405 may be a receiver of an automobile.

The cell selection module 410 may determine that wireless device 400 has an asymmetric UL/DL condition, and may modify a cell selection parameter associated with the access network based on identifying the asymmetric UL/DL condition of the wireless device 400.

The transmitter 415 may transmit signals received from other components of wireless device 400. In some examples, the transmitter 415 may be collocated with the receiver 405 in a transceiver module. The transmitter 415 may include a single antenna, or it may include a several antennas.

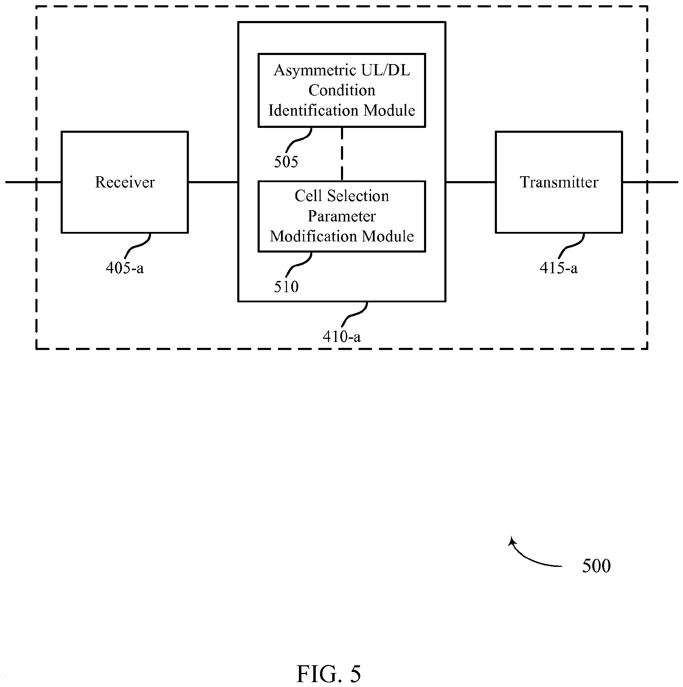

**FIG. 5** shows a block diagram of a wireless device 500 for cell selection for devices having an asymmetric condition between uplink and downlink communications in accordance with aspects of the present disclosure. Wireless device 500 may be an example of aspects of a wireless device 400 or a UE 115 described with reference to FIGs. 1-4. Wireless device 500 may include a receiver 405-a, a cell selection module 410-a, or a transmitter 415-a. Wireless device 500 may also include a processor. Each of these components may be in communication with one another. The cell selection module 410-a may also include an asymmetric UL/DL condition identification module 505, and a cell selection parameter modification module 510.

The receiver 405-a may receive information which may be passed on to cell selection module 410-a, and to other components of wireless device 500. The cell selection module 410-a may perform the operations described with reference to FIG. 4. The transmitter 415-a may transmit signals received from other components of wireless device 500.

The asymmetric UL/DL condition identification module 505 may determine that wireless device 500 has, or is otherwise configured to operate with an asymmetric UL/DL condition as described with reference to FIGs. 2 and 3. For example, the asymmetric UL/DL condition identification module 505 may determine that a DL reception range for the wireless device 500 is greater than a UL transmission range for the wireless device 500, which may include identifying an availability of a high-gain antenna. In some examples the asymmetric UL/DL condition identification module 505 may determine that a number of uplink transmit failures from the wireless device 500 to a base station 105 exceeds a threshold.

The cell selection parameter modification module 510 may modify a cell selection parameter associated with the access network based at least in part on identifying an asymmetric UL/DL condition of the wireless device 500, such as identifying that the wireless devices 500 has, or is otherwise configured to operate with an asymmetric UL/DL capability as described with reference to FIGs. 2 and 3. In some examples, modifying the cell selection parameter may include bypassing or offsetting a PLMN cell selection parameter. The cell selection parameter may, for example, be associated with a first RAT of the access network. The cell selection parameter modification module 510 may modify a second cell selection parameter associated with a second RAT of a second access network, where the second RAT is different from the first RAT.

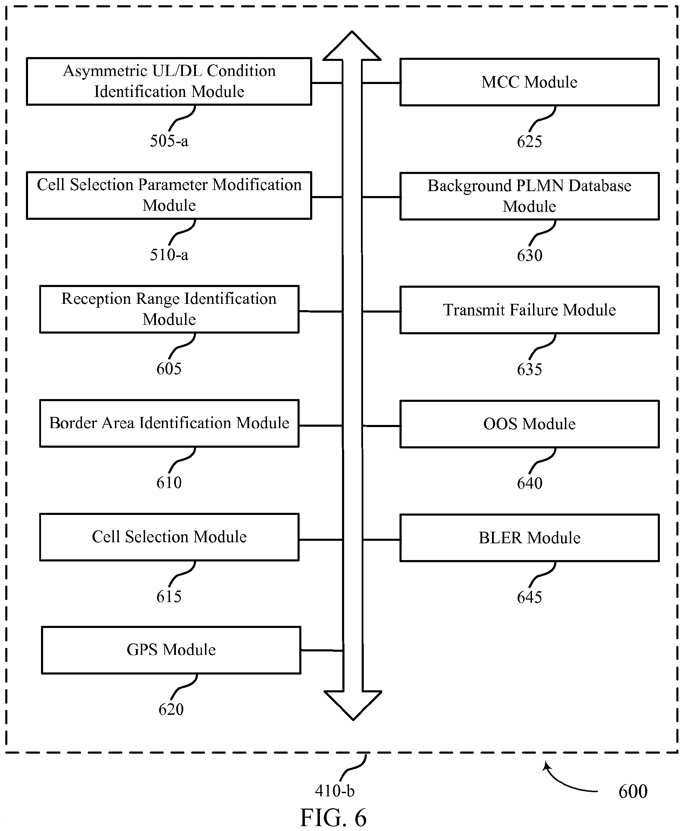

**FIG. 6** shows a block diagram 600 of a cell selection module 410-b which may be a component of a wireless device 400 or a wireless device 500 for cell selection for devices having an asymmetric condition between uplink and downlink communications in accordance with aspects of the present disclosure. The cell selection module 410-b may be an example of aspects of a cell selection module 410 described with reference to FIGs. 4-5. The cell selection module 410-b may include an asymmetric UL/DL condition identification module 505-a, and a cell selection parameter modification module 510-a. Each of these modules may perform the functions described with reference to FIG. 5. The cell selection module 410-b may also include a reception range identification module 605, a border area identification module 610, a cell selection module 615, a GPS module 620, an MCC module 625, a background PLMN database module 630, a transmit failure module 635, an OOS module 640, and a BLER module 645.

The reception range identification module 605 may identify various characteristics of communication range for a wireless device that includes the cell selection module 410-b. For instance, the reception range identification module 605 may identify a DL reception range for a wireless device that includes the cell selection module 410-b, and the reception range identification module 605 may identify a UL reception range for a wireless device that includes the cell selection module 410-b. In some examples, the reception range identification module 605 may identify an availability of a high gain receiver for a wireless device that includes the cell selection module 410-b. In various examples, the asymmetric UL/DL condition identification module 505-a may identify an asymmetric UL/DL capability of a wireless device that includes the cell selection module 410-b based on determining that a DL reception range of the UE is greater than a UL transmission range of the UE, and/or based on identifying an availability of a high gain receiver of the UE.

The border area identification module 610 may determine that a wireless device that includes the cell selection module 410-b is located at a border area of an access network where, for instance, it may be within the range of multiple different PLMNs as described with reference to FIGs. 2 and 3

The cell selection module 615 may perform a cell selection procedure for a second access network based at least in part on the modified cell selection parameter as described with reference to FIGs. 2 and 3.

The GPS module 620 may be configured such that determining that wireless device is located at a border area includes identifying a set of GPS coordinates for the UE, and the set of GPS coordinates may correspond to the border area as described with reference to FIGs. 2 and 3.

The MCC module 625 may be configured such that determining that the wireless device is located at a border area may include identifying an MCC of a second access network, and the MCC of the second access network may be different from an MCC of the access network as described with reference to FIGs. 2 and 3. The MCC module 625 may also identify the access network based at least in part on an MCC.

The background PLMN database module 630 may be configured such that determining that the wireless device may be located at a border area may include determining that an identified VPLMN corresponds to a BPLMN database as described with reference to FIGs. 2 and 3.

The transmit failure module 635 may determine that a number of transmit failures exceeds a threshold as described with reference to FIGs. 2 and 3. described with. In some examples, the transmit failure module 635 may be configured such that identifying an asymmetric UL/DL condition of a wireless device that includes the cell selection module 410-b is based on determining that a number of transmit failures exceeds a threshold as described with reference to FIGs. 2 and 3.

The various components of wireless device 400, wireless device 500, or cell selection module 410-b may each, individually or collectively, be implemented with at least one application specific integrated circuit (ASIC) adapted to perform some or all of the applicable functions in hardware. Alternatively, the functions may be performed by one or more other processing units (or cores), on at least one integrated circuit (IC). In other examples, other types of integrated circuits may be used (*e.g.,* Structured/Platform ASICs, a field programmable gate array (FPGA), or another semi-custom integrated circuit (IC)), which may be programmed in any manner known in the art. The functions of each unit may also be implemented, in whole or in part, with instructions embodied in a memory, formatted to be executed by one or more general or application-specific processors.

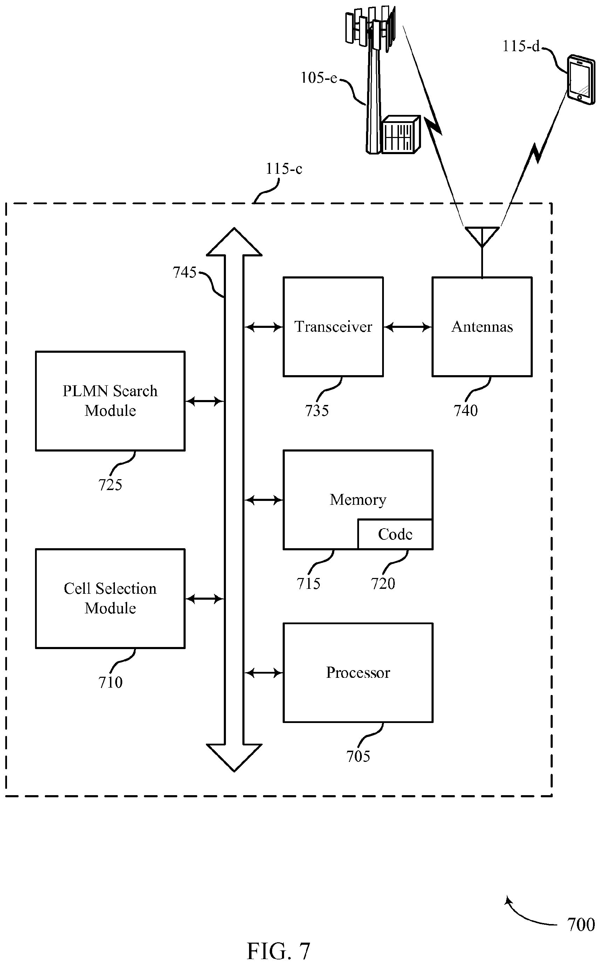

**FIG. 7** shows a diagram of a system 700 including a UE 115 configured for cell selection for devices having an asymmetric condition between uplink and downlink communications in accordance with aspects of the present disclosure. System 700 may include UE 115-c, which may be an example of a wireless device 400, a wireless device 500, or a UE 115 described with reference to FIGs. 1-6. UE 115-c may include a cell selection module 710, which may be an example of a cell selection module 410 described with reference to FIGs. 4, 5, or 6. UE 115-c may also include a PLMN search module 725. UE 115-c may also include components for bi-directional voice and data communications including components for transmitting communications and components for receiving communications. For example, UE 115-c may communicate bi-directionally with base station 105-e or UE 115-d.

The PLMN search module 725 may be configured to conduct a PLMN search. For example, PLMN search module 725 search for a VPLMN based at least in part on determining that a number of transmit failures exceeds the threshold as described with reference to FIGs. 2 and 3.

UE 115-c may also include a processor module 705, and memory 715 (including code 720), a transceiver module 735, and one or more antenna(s) 740, each of which may communicate, directly or indirectly, with one another (*e.g.,* via buses 745). The transceiver module 735 may communicate bi-directionally, via the antenna(s) 740 or wired or wireless links, with one or more networks, as described above. For example, the transceiver module 735 may communicate bi-directionally with a base station 105 or another UE 115. The transceiver module 735 may include a modem to modulate the packets and provide the modulated packets to the antenna(s) 740 for transmission, and to demodulate packets received from the antenna(s) 740. While UE 115-c may include a single antenna 740, UE 115-c may also have multiple antennas 740 capable of concurrently transmitting or receiving multiple wireless transmissions.

The memory 715 may include random access memory (RAM) and read only memory (ROM). The memory 715 may store computer-readable, computer-executable software/firmware code 720 including instructions that, when executed, cause the processor module 705 to perform various functions described herein (*e.g.,* cell selection in PLMN border areas, *etc.*). Alternatively, the software/firmware code 720 may not be directly executable by the processor module 705 but cause a computer (*e.g.,* when compiled and executed) to perform functions described herein. The processor module 705 may include an intelligent hardware device, (*e.g.,* a central processing unit (CPU), a microcontroller, an ASIC, *etc.*)

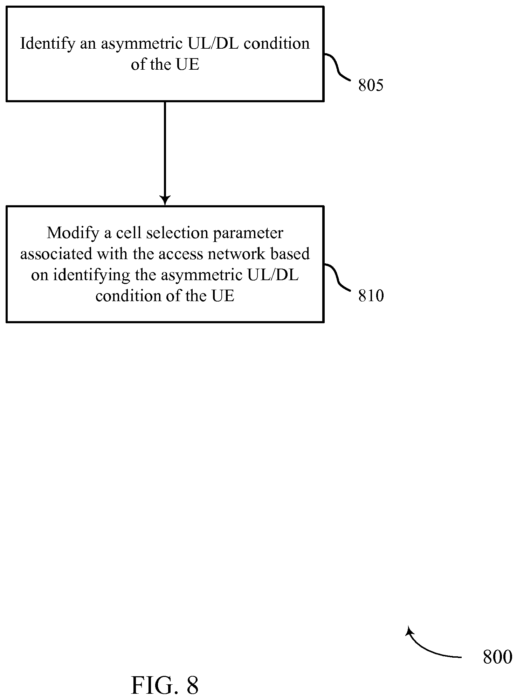

**FIG. 8** shows a flowchart illustrating a method 800 for cell selection for devices having an asymmetric condition between uplink and downlink communications in accordance with aspects of the present disclosure. The operations of method 800 may be implemented by a UE 115 or its components as described with reference to FIGs. 1-7. For example, the operations of method 800 may be performed by the cell selection module 410 as described with reference to FIGs. 4-7. In some examples, a UE 115 may execute a set of codes to control the functional elements of the UE 115 to perform the functions described below. Additionally or alternatively, the UE 115 may perform aspects the functions described below using special-purpose hardware.

At block 805, the UE 115 may identify an asymmetric UL/DL condition of the UE as described with reference to FIGs. 2 and 3. In certain examples, the operations of block 805 may be performed by one or more of the cell selection modules 410 described with reference to FIG. 4, 5, or 6, or asymmetric UL/DL condition identification module 505 as described with reference to FIG. 5 or 6.

At block 810, the UE 115 may modify a cell selection parameter associated with the access network based at least in part on identifying the asymmetric UL/DL condition as described with reference to FIGs. 2 and 3. In certain examples, the operations of block 810 may be performed by one or more of the cell selection modules 410 described with reference to FIG. 4, 5, or 6, or the cell selection parameter modification modules 510 as described with reference to FIGs. 5 or 6.

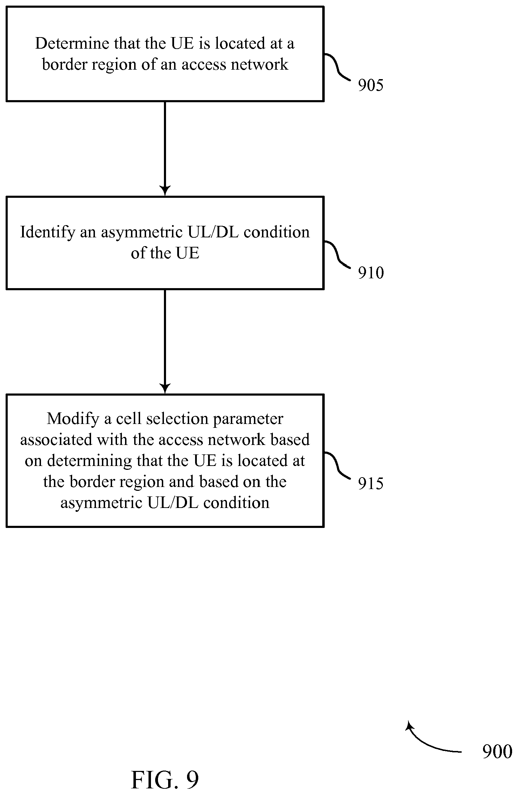

**FIG. 9** shows a flowchart illustrating a method 900 for cell selection for devices having an asymmetric condition between uplink and downlink communications in accordance with aspects of the present disclosure. The operations of method 900 may be implemented by a UE 115 or its components as described with reference to FIGs. 1-7. For example, the operations of method 900 may be performed by the cell selection module 410 as described with reference to FIGs. 4-7. In some examples, a UE 115 may execute a set of codes to control the functional elements of the UE 115 to perform the functions described below. Additionally or alternatively, the UE 115 may perform aspects the functions described below using special-purpose hardware. The method 900 may also incorporate aspects of method 800 described with reference to FIG. 8.

At block 905, the UE 115 may determine that the UE is located at a border area of an access network as described with reference to FIGs. 2 and 3. In certain examples, the operations of block 905 may be performed by one or more of the cell selection modules 410 described with reference to FIG. 4, 5, or 6, or the border area identification module 610 as described with reference to FIG. 6.

At block 910, the UE 115 may identify an asymmetric UL/DL condition as described with reference to FIGs. 2 and 3. In certain examples, the operations of block 910 may be performed by one or more of the cell selection modules 410 described with reference to FIG. 4, 5, or 6, or the asymmetric UL/DL condition identification modules 505 as described with reference to FIGs. 5 or 6.

At block 915, the UE 115 may modify a cell selection parameter associated with the access network based at least in part on determining that the UE is located at the border area as described with reference to FIGs. 2 and 3. In certain examples, the operations of block 915 may be performed by one or more of the cell selection modules 410 described with reference to FIG. 4, 5, or 6, or the cell selection parameter modification modules 510 as described with reference to FIG. 5 or 6.

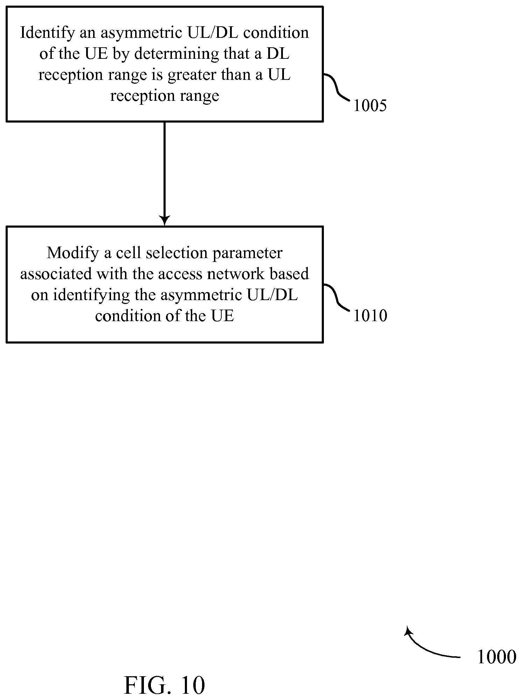

**FIG. 10** shows a flowchart illustrating a method 1000 for cell selection for devices having an asymmetric condition between uplink and downlink communications in accordance with aspects of the present disclosure. The operations of method 1000 may be implemented by a UE 115 or its components as described with reference to FIGs. 1-7. For example, the operations of method 1000 may be performed by the cell selection module 410 as described with reference to FIGs. 4-7. In some examples, a UE 115 may execute a set of codes to control the functional elements of the UE 115 to perform the functions described below. Additionally or alternatively, the UE 115 may perform aspects the functions described below using special-purpose hardware. The method 1000 may also incorporate aspects of methods 800 or 900 described with reference to FIGs. 8 or 9.

At block 1005, the UE 115 may identify an asymmetric UL/DL condition of the UE by determining that a DL reception range of the UE is greater than a UL transmission range of the UE, as described with reference to FIGs. 2 and 3. In certain examples, the operations of block 1005 may be performed by one or more of the cell selection modules 410 described with reference to FIG. 4, 5, or 6, or the asymmetric UL/DL condition identification modules 505 as described with reference to FIGs. 5 or 6, or reception range identification module 605 described with reference to FIG. 6.

At block 1010, the UE 115 may modify a cell selection parameter associated with the access network based at least in part on identifying the asymmetric UL/DL condition of the UE as described with reference to FIGs. 2 and 3. In certain examples, the operations of block 1010 may be performed by one or more of the cell selection modules 410 described with reference to FIG. 4, 5, or 6, or the cell selection parameter modification modules 510 as described with reference to FIG. 5 or 6.

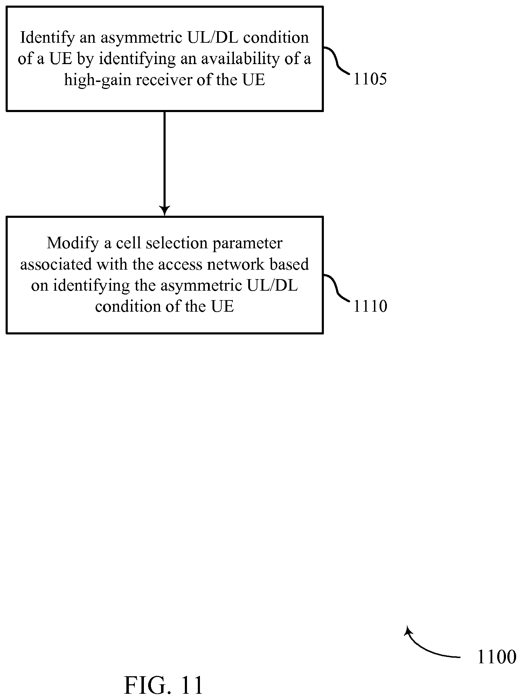

**FIG. 11** shows a flowchart illustrating a method 1100 for cell selection for devices having an asymmetric condition between uplink and downlink communications in accordance with aspects of the present disclosure. The operations of method 1100 may be implemented by a UE 115 or its components as described with reference to FIGs. 1-7. For example, the operations of method 1100 may be performed by the cell selection module 410 as described with reference to FIGs. 4-7. In some examples, a UE 115 may execute a set of codes to control the functional elements of the UE 115 to perform the functions described below. Additionally or alternatively, the UE 115 may perform aspects the functions described below using special-purpose hardware. The method 1100 may also incorporate aspects of methods 800, 900, and 1000 of FIGs. 8-10.

At block 1105, the UE 115 may identify an asymmetric UL/DL condition of a UE by identifying an availability of a high-gain receiver of the UE as described with reference to FIGs. 2 and 3. In certain examples, the operations of block 1105 may be performed by one or more of the cell selection modules 410 described with reference to FIG. 4, 5, or 6, or the asymmetric UL/DL condition identification modules 505 as described with reference to FIGs. 5 or 6, or reception range identification module 605 described with reference to FIG. 6.

At block 1110, the UE 115 may modify a cell selection parameter associated with the access network based at least in part on identifying the asymmetric UL/DL condition of the UE as described with reference to FIGs. 2 and 3. In certain examples, the operations of block 1110 may be performed by one or more of the cell selection modules 410 described with reference to FIG. 4, 5, or 6, or the cell selection parameter modification modules 510 as described with reference to FIG. 5 or 6.

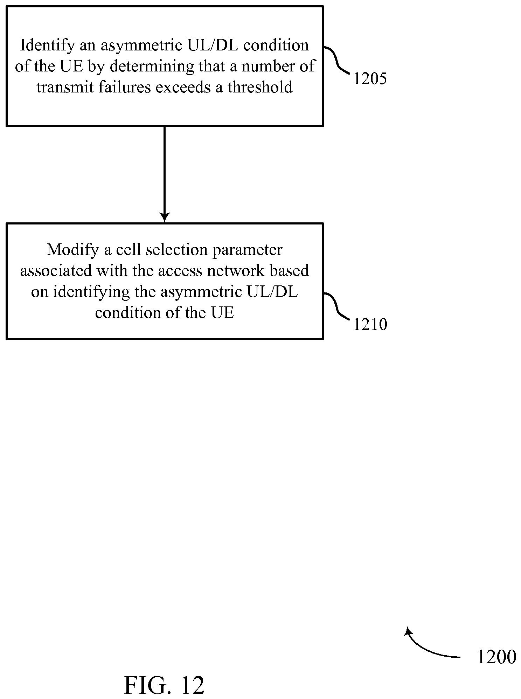

**FIG. 12** shows a flowchart illustrating a method 1200 for cell selection for devices having an asymmetric condition between uplink and downlink communications in accordance with aspects of the present disclosure. The operations of method 1200 may be implemented by a UE 115 or its components as described with reference to FIGs. 1-7. For example, the operations of method 1200 may be performed by the cell selection module 410 as described with reference to FIGs. 4-7. In some examples, a UE 115 may execute a set of codes to control the functional elements of the UE 115 to perform the functions described below. Additionally or alternatively, the UE 115 may perform aspects the functions described below using special-purpose hardware. The method 1200 may also incorporate aspects of methods 800, 900, 1000, and 1100 of FIGs. 8-11.

At block 1205, the UE 115 may identify an asymmetric UL/DL condition of the UE by determining that a number of transmit failures exceeds a threshold as described with reference to FIGs. 2 and 3. In certain examples, the operations of block 1205 performed by one or more of the cell selection modules 410 described with reference to FIG. 4, 5, or 6, or the transmit failure module 635 as described with reference to FIG. 6.

At block 1210, the UE 115 may modify a cell selection parameter based at least in part on identifying the asymmetric UL/DL condition of the UE as described with reference to FIGs. 2 and 3. In certain examples, the operations of block 1210 may be performed by one or more of the cell selection modules 410 described with reference to FIG. 4, 5, or 6, or the cell selection parameter modification modules 510 as described with reference to FIG. 5 or 6.

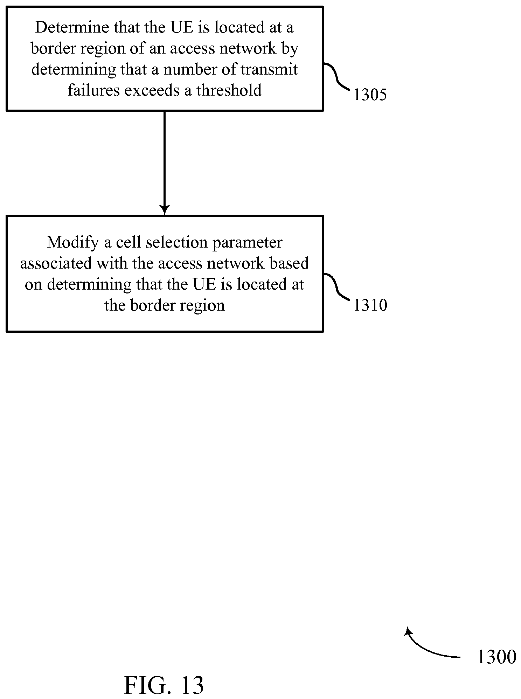

**FIG. 13** shows a flowchart illustrating a method 1300 for cell selection for devices having an asymmetric condition between uplink and downlink communications in accordance with aspects of the present disclosure. The operations of method 1300 may be implemented by a UE 115 or its components as described with reference to FIGs. 1-7. For example, the operations of method 1300 may be performed by the cell selection module 410 as described with reference to FIGs. 4-7. In some examples, a UE 115 may execute a set of codes to control the functional elements of the UE 115 to perform the functions described below. Additionally or alternatively, the UE 115 may perform aspects the functions described below using special-purpose hardware. The method 1300 may also incorporate aspects of methods 800, 900, 1000, 1100, and 1200 of FIGs. 8-12.

At block 1305, the UE 115 may determine that the UE is located at a border region of an access network by determining that a number of transmit failures exceeds a threshold as described with reference to FIGs. 2-3. In certain examples, the operations of block 1305 may be performed by one or more of the cell selection modules 410 described with reference to FIG. 4, 5, or 6, or the border area identification module 610 or the transmit failure module 635 as described with reference to FIG. 6.

At block 1310, the UE 115 may modify a cell selection parameter associated with the access network based at least in part on determining that the UE is located at the border region as described with reference to FIGs. 2-3. In certain examples, the operations of block 1310 may be performed by one or more of the cell selection modules 410 described with reference to FIG. 4, 5, or 6, or the cell selection parameter modification modules 510 as described with reference to FIGs. 5 or 6.

Thus, methods 800, 900, 1000, 1100, 1200, and 1300 may provide for cell selection for devices having an asymmetric condition between uplink and downlink communications in accordance with aspects of the present disclosure. In some examples, aspects from two or more of the methods 800, 900, 1000, 1100, 1200, or 1300 described with reference to FIGs. 8, 9, 10, 11, 12, or 13 may be combined. It should be noted that the methods 800, 900, 1000, 1100, 1200, and 1300 are example implementations, and that the operations of the methods 800, 900, 1000, 1100, 1200, or 1300 may be rearranged or otherwise modified such that other implementations are possible.

The detailed description set forth above in connection with the appended drawings describes example embodiments and does not represent all the examples that may be implemented or that are within the scope of the claims. The term "exemplary" used in this description means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (*e.g.,* a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium.

For example, due to the nature of software, functions described above can be implemented using software executed by a processor, hardware, firmware, hardwiring, or combinations of any of these. Features implementing functions may be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of' or "one or more of') indicates an inclusive list such that, for example, a phrase referring to "at least one of' a list of items refers to any combination of those items, including single members. As an example, "at least one of: A, B, or C" is intended to cover A, B, C, A-B, A-C, B-C, and A-B-C., as well as any combination with multiples of the same element (e.g., A-A A-A-A, A-A-B, A-A-C, A-B-B, A-C-C, B-B, B-B-B, B-B-C, C-C, and C-C-C or any other ordering of A, B, and C).

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

The previous description of the disclosure is provided to enable a person skilled in the art to make or use the disclosure. Various modifications to the disclosure will be readily apparent to those skilled in the art, and the principles defined in the independent claims may be applied to other variations without departing from the scope of the disclosure. Thus, the disclosure is not to be limited to the examples and designs described herein but is to be accorded the broadest scope consistent with the principles and novel features as defined in the independent claims.

Techniques described herein may be used for various wireless communications systems such as code division multiple access (CDMA), time division multiple access (TDMA), frequency division multiple access (FDMA), OFDMA, single carrier frequency division multiple access (SC-FDMA), and other systems. The terms "system" and "network" are often used interchangeably. A CDMA system may implement a radio technology such as CDMA2000, Universal Terrestrial Radio Access (UTRA), *etc.* CDMA2000 covers IS-2000, IS-95, and IS-856 standards. IS-2000 Releases 0 and A are commonly referred to as CDMA2000 IX, IX, *etc.* IS-856 (TIA-856) is commonly referred to as CDMA2000 1xEV-DO, High Rate Packet Data (HRPD), *etc.* UTRA includes Wideband CDMA (WCDMA) and other variants of CDMA. A TDMA system may implement a radio technology such as Global System for Mobile Communications (GSM). An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, *etc.* UTRA and E-UTRA are part of Universal Mobile Telecommunications system (UMTS). 3GPP Long Term Evolution (LTE) and LTE-Advanced (LTE-A) are new releases of Universal Mobile Telecommunications System (UMTS) that use E-UTRA. UTRA, E-UTRA, UMTS, LTE, LTE-A, and Global System for Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. The description above, however, describes an LTE system for purposes of example, and LTE terminology is used in much of the description above, although the techniques are applicable beyond LTE applications.

**Claims**

1. A method of wireless communication at a user equipment, UE (115), comprising:

   determining (905), at the UE (115), that the UE (115) is located at a border area (215) of an access network which includes identifying a mobile country code, MCC, of a second access network, wherein the MCC of the second access network is different from an MCC of the access network;
   identifying (315, 805, 910), at the UE (115), an asymmetric condition of the UE (115) between uplink communications (210) of the UE (115) and downlink communications (205) of the UE (115) as a result of a mismatch between a downlink reception range of the UE (115) and an uplink transmission range of the UE (115); and

modifying (320, 810, 915, 1010, 1110, 1210), at the UE (115), a cell selection parameter of the UE (115) associated with the access network based at least in part on determining that the UE (115) is located at the border area (215) and on identifying the asymmetric condition.

2. The method of claim 1, wherein identifying (315, 805, 910) the asymmetric condition comprises:

determining (1005) that the downlink reception range of the UE (115) is greater than the uplink transmission range of the UE (115).

3. The method of claim 1, wherein identifying (315, 805, 910) the asymmetric condition comprises:

identifying (1105) an availability of a high gain receiver of the UE (115).

4. The method of claim 1, wherein identifying (315, 805, 910) the asymmetric condition comprises:

determining (1205) that a number of transmit failures exceeds a threshold.

5. The method of claim 4, further comprising:

declaring, at the UE (115), out of sync, OOS, with a serving cell of the access network.

6. The method of claim 4, further comprising:

searching, at the UE (115), for a visitor public land mobile network, VPLMN, based at least in part on determining that a number of transmit failures exceeds the threshold.

7. The method of claim 1, further comprising:

performing, at the UE (115), a cell selection procedure for a second access network based at least in part on the modified cell selection parameter.

8. The method of claim 1, wherein modifying (320, 810, 915) the cell selection parameter comprises:

bypassing a public land mobile network, PLMN, cell selection.

9. The method of claim 1, further comprising:

receiving, at the UE (115), broadcast cell selection information from the access network, wherein the cell selection parameter is based at least in part on the broadcast cell selection information.

10. The method of claim 1, wherein the cell selection parameter is associated with a first radio access technology, RAT, of the access network, and wherein the method further comprises:

modifying, at the UE (115), a second cell selection parameter associated with a second RAT of a second access network, wherein the second RAT is different from the first RAT.

11. The method of claim 1, wherein the access network is a public land mobile network, PLMN.

12. The method of claim 1, further comprising:

identifying the access network based at least in part on a mobile country code, MCC.

13. A user equipment, UE, (115) for wireless communication, comprising:

means for determining (905) that the UE (115) is located at a border area (215) of an access network which includes identifying a mobile country code, MCC, of a second access network, wherein the MCC of the second access network is different from an MCC of the access network;
means for identifying an asymmetric condition of the UE (115) between uplink communications of the UE and downlink communications of the UE (115) as a result of a mismatch between a downlink reception range of the UE (115) and an uplink transmission range of the UE (115); and
means for modifying a cell selection parameter of the UE (115) associated with the access network based at least in part on determining that the UE (115) is located at the border area (215) and on identifying the asymmetric condition.

14. A non-transitory computer-readable medium storing code for wireless communications, the code comprising instructions executable at a user equipment, UE, to carry out a method as defined in any of claims 1 to 12.

**Patentansprüche**

1. Ein Verfahren von drahtloser Kommunikation an einem Benutzergerät, UE (115), aufweisend:

   Bestimmen (905), an dem UE (115), dass das UE (115) lokalisiert ist an einer Grenzregion (215) von einem Zugriffsnetzwerk, was umfasst Identifizieren eines mobilen Ländercodes, MCC, von einem zweiten Zugriffsnetzwerk, wobei der MCC von dem zweiten Zugriffsnetzwerk verschieden ist von einem MCC von dem Zugriffsnetzwerk;
   Identifizieren (315, 805, 910), an dem UE (115), einer asymmetrischen Bedingung von dem UE (115) zwischen Aufwärtsverbindungskommunikationen (210) von dem UE (115) und Abwärtsverbindungskommunikationen (205) von dem UE (115) als ein Ergebnis von einer Diskrepanz zwischen einer Abwärtsverbindungsempfangsreichweite von dem UE (115) und einer Aufwärtsverbindungsübertragungsreichweite von dem UE (115); und
   Modifizieren (320, 810, 915, 1010, 1110, 1210), an dem UE (115), eines Zellenauswahlparameters von dem UE (115) verbunden mit dem Zugriffsnetzwerk basierend zumindest teilweise auf Bestimmen, dass das UE (115) lokalisiert ist in der Grenzregion (215) und auf Identifizieren der asymmetrischen Bedingung.

2. Das Verfahren von Anspruch 1, wobei Identifizieren (315, 805, 910) der asymmetrischen Bedingung aufweist:

   Bestimmen (1005), dass die Abwärtsverbindungsempfangsreichweite von dem UE (115) größer ist als die Aufwärtsverbindungsübertragungsreichweite von dem UE (115).

3. Das Verfahren von Anspruch 1, wobei Identifizieren (315, 805, 910) der asymmetrischen Bedingung aufweist:

   Identifizieren (1105) einer Verfügbarkeit von einem hohen Ertrag-Empfänger von dem UE (115).

4. Das Verfahren von Anspruch 1, wobei Identifizieren (315, 805, 910) der asymmetrischen Bedingung aufweist:

   Bestimmen (1205), dass eine Anzahl von Übertragungsfehlern einen Grenzwert übersteigt.

5. Das Verfahren von Anspruch 4, weiter aufweisend:

   Verkünden, an dem UE (115), dass das UE nicht mehr synchron, OOS, ist mit einer dienenden Zelle von dem Zugriffsnetzwerk.

6. Das Verfahren von Anspruch 4, weiter aufweisend:

   Suchen, an dem UE (115), für ein Besucher öffentliches terrestrisches Mobilfunknetz, VPLMN, basierend zumindest teilweise auf Bestimmen, dass eine Anzahl von Übertragungsfehlern den Grenzwert übersteigt.

7. Das Verfahren von Anspruch 1, weiter aufweisend:

   Durchführen, an dem UE (115), einer Zellenauswahlprozedur für ein zweites Zugriffsnetzwerk basierend zumindest teilweise auf dem modifizierten Zellenauswahlparameter.

8. Das Verfahren von Anspruch 1, wobei Modifizieren (320, 810, 915) des Zellenauswahlparameters aufweist:

   Bypassen einer Auswahl einer Zelle eines öffentlichen terrestrischen Mobilfunknetzes, PLMN.

9. Das Verfahren von Anspruch 1, weiter aufweisend:

   Empfangen, an dem UE (115), von Broadcast-Zellenauswahlinformation von dem Zugriffsnetzwerk, wobei der Zellenauswahlparameter basiert zumindest teilweise auf der Broadcast-Zellenauswahlinformation.

10. Das Verfahren gemäß Anspruch 1, wobei der Zellenauswahlparameter verbunden ist mit einer ersten Funkzugriffstechnologie, RAT, von dem Zugriffsnetzwerk und wobei das Verfahren weiter aufweist:

    Modifizieren, an dem UE (115), eines zweiten Zellenauswahlparameters verbunden mit einer zweiten RAT von dem zweiten Funkzugriffsnetzwerk, wobei die zweite RAT verschieden von der ersten RAT ist.

11. Das Verfahren von Anspruch 1, wobei das Funkzugriffsnetzwerk ein öffentliches terrestrisches Mobilfunknetzwerk, PLMN, ist.

12. Das Verfahren von Anspruch 1, weiter aufweisend:

    Identifizieren des Funkzugriffsnetzwerks basierend zumindest teilweise auf einem mobilen Ländercode, MCC.

13. Ein Benutzergerät, UE (115), für drahtlose Kommunikation, aufweisend:

    Mittel zum Bestimmen (905), dass das UE (115) lokalisiert ist an einer Grenzregion (215) von einem Zugriffsnetzwerk, was umfasst Identifizieren eines mobilen Ländercodes, MCC, von einem zweiten Zugriffsnetzwerk, wobei der MCC von dem zweiten Zugriffsnetzwerk verschieden ist von einem MCC von dem Zugriffsnetzwerk; Mittel zum Identifizieren einer asymmetrischen Bedingung von dem UE (115) zwischen Aufwärtsverbindungskommunikationen (210) von dem UE (115) und Abwärtsverbindungskommunikationen (205) von dem UE (115) als ein Ergebnis von einer Diskrepanz zwischen einer Abwärtsverbindungsempfangsreichweite von dem UE (115) und einer Aufwärtsverbindungsübertragungsreichweite von dem UE (115); und Mittel zum Modifizieren eines Zellenauswahlparameters von dem UE (115) verbunden mit dem Zugriffsnetzwerk basierend zumindest teilweise auf Bestimmen, dass das UE (115) lokalisiert ist in der Grenzregion (215) und auf Identifizieren der asymmetrischen Bedingung.

14. Ein nicht-vergängliches computerlesbares Medium, welches Code für drahtlose Kommunikationen speichert, wobei der Code aufweist Instruktionen, die ausführbar sind an einem Benutzergerät, UE, zum Ausführen eines Verfahrens wie definiert in einem von den Ansprüchen 1 bis 12.


**Revendications**

1. Procédé de communication sans fil au niveau d'un équipement utilisateur, UE (115), comprenant :

   la détermination (905), au niveau de l'UE (115), que l'UE (115) est situé au niveau d'une zone frontière (215) d'un réseau d'accès qui inclut l'identification d'un indicatif de pays du mobile, MCC, d'un second réseau d'accès, le MCC du second réseau d'accès étant différent d'un MCC du réseau d'accès ;
   l'identification (315, 805, 910), au niveau de l'UE (115), d'une condition asymétrique de l'UE (115) entre communications de liaison montante (210) de l'UE (115) et communications de liaison descendante (205) de l'UE (115) à cause d'une discordance entre une portée en réception en liaison descendante de l'UE (115) et une portée en émission en liaison montante de l'UE (115) ; et
   la modification (320, 810, 915, 1010, 1110, 1210), au niveau de l'UE (115), d'un paramètre de sélection de cellule de l'UE (115) associé au réseau d'accès sur la base au moins en partie de la détermination que l'UE (115) est situé au niveau de la zone frontière (215) et de l'identification de la condition asymétrique.

2. Procédé selon la revendication 1, dans lequel l'identification (315, 805, 910) de la condition asymétrique comprend :

   la détermination (1005) que la portée en réception en liaison descendante de l'UE (115) est plus grande que la portée en émission en liaison montante de l'UE (115).

3. Procédé selon la revendication 1, dans lequel l'identification (315, 805, 910) de la condition asymétrique comprend :

l'identification (1105) d'une disponibilité d'un récepteur à grand gain de l'UE (115).

4. Procédé selon la revendication 1, dans lequel l'identification (315, 805, 910) de la condition asymétrique comprend :

   la détermination (1205) qu'un nombre d'échecs d'émission excède un seuil.

5. Procédé selon la revendication 4, comprenant en outre :

   la déclaration, au niveau de l'UE (115), d'une désynchronisation, OOS, avec une cellule de desserte du réseau d'accès.

6. Procédé selon la revendication 4, comprenant en outre :

   la recherche, au niveau de l'UE (115), d'un réseau mobile terrestre public visité, VPLMN, sur la base au moins en partie de la détermination qu'un nombre d'échecs d'émission excède le seuil.

7. Procédé selon la revendication 1, comprenant en outre :

   la réalisation, au niveau de l'UE (115), d'une procédure de sélection de cellule pour un second réseau d'accès sur la base au moins en partie du paramètre modifié de sélection de cellule.

8. Procédé selon la revendication 1, dans lequel la modification (320, 810, 915) du paramètre de sélection de cellule comprend :

   l'outrepassement d'une sélection de cellule de réseau mobile terrestre publique, PLMN.

9. Procédé selon la revendication 1, comprenant en outre :

   la réception, au niveau de l'UE (115), d'informations de sélection de cellule diffusées depuis le réseau d'accès, dans lequel le paramètre de sélection de cellule est basé au moins en partie sur les informations de sélection de cellule diffusées.

10. Procédé selon la revendication 1, dans lequel le paramètre de sélection de cellule est associé à une première technologie d'accès radio, RAT, du réseau d'accès, et dans lequel le procédé comprend en outre :

    la modification, au niveau de l'UE (115), d'un second paramètre de sélection de cellule associé à une seconde RAT d'un second réseau d'accès, dans lequel la seconde RAT est différente de la première RAT.

11. Procédé selon la revendication 1, dans lequel le réseau d'accès est un réseau mobile terrestre public, PLMN.

12. Procédé selon la revendication 1, comprenant en outre :

    l'identification du réseau d'accès sur la base au moins en partie d'un indicatif de pays du mobile, MCC.

13. Équipement utilisateur, UE, (115) pour une communication sans fil, comprenant :

    un moyen pour déterminer (905) que l'UE (115) est situé au niveau d'une zone frontière (215) d'un réseau d'accès qui inclut l'identification d'un indicatif de pays du mobile, MCC, d'un second réseau d'accès, le MCC du second réseau d'accès étant différent d'un MCC du réseau d'accès ;
    un moyen pour identifier une condition asymétrique de l'UE (115) entre communications de liaison montante de l'UE et communications de liaison descendante de l'UE (115) à cause d'une discordance entre une portée en réception en liaison descendante de l'UE (115) et une portée en émission en liaison montante de l'UE (115) ; et
    un moyen pour modifier un paramètre de sélection de cellule de l'UE (115) associé au réseau d'accès sur la base au moins en partie de la détermination que l'UE (115) est situé au niveau de la zone frontière (215) et sur la base de l'identification de la condition asymétrique.

14. Support non transitoire lisible par calculateur stockant du code pour des communications sans fil, le code comprenant des instructions exécutables au niveau d'un équipement utilisateur, UE, pour mettre en oeuvre un procédé selon l'une des revendications 1 à 12.

EP 3 225 056 B1

FIG. 1

FIG. 2

FIG. 3

FIG. 4

EP 3 225 056 B1

FIG. 5

25

Asymmetric UL/DL Condition
Identification Module

505-a

Cell Selection Parameter Modification
Module

510-a

Reception Range Identification
Module

605

Border Area Identification Module

610

Cell Selection Module

615

GPS Module

620

MCC Module

625

Background PLMN Database
Module

630

Transmit Failure Module

635

OOS Module

640

BLER Module

645

410-b

600

FIG. 6

FIG. 7

Identify an asymmetric UL/DL condition
of the UE

805

Modify a cell selection parameter
associated with the access network based
on identifying the asymmetric UL/DL
condition of the UE

810

800

FIG. 8

Determine that the UE is located at a
border region of an access network

905

Identify an asymmetric UL/DL condition
of the UE

910

Modify a cell selection parameter
associated with the access network based
on determining that the UE is located at
the border region and based on the
asymmetric UL/DL condition

915

900

FIG. 9

Identify an asymmetric UL/DL condition of the UE by determining that a DL reception range is greater than a UL reception range

1005

Modify a cell selection parameter associated with the access network based on identifying the asymmetric UL/DL condition of the UE

1010

1000

FIG. 10

Identify an asymmetric UL/DL condition of a UE by identifying an availability of a high-gain receiver of the UE

1105

Modify a cell selection parameter associated with the access network based on identifying the asymmetric UL/DL condition of the UE

1110

1100

FIG. 11

Identify an asymmetric UL/DL condition
of the UE by determining that a number of
transmit failures exceeds a threshold

1205

Modify a cell selection parameter
associated with the access network based
on identifying the asymmetric UL/DL
condition of the UE

1210

1200

FIG. 12

Determine that the UE is located at a border region of an access network by determining that a number of transmit failures exceeds a threshold

1305

Modify a cell selection parameter associated with the access network based on determining that the UE is located at the border region

1310

1300

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140098693 A1
- WO 2014057441 A2
- WO 2012066384 A1